# EUROPEAN PATENT APPLICATION

(11) **EP 1 441 014 A1**
(43) Date of publication of application: **28.07.2004**
(21) Application number: 03100126.6
(22) Date of filing: 22.01.2003
(51) Int. Cl.: C09D 127/12, C08F 6/16

(54) **Aqueous fluoropolymer dispersion comprising a melt processible fluoropolymer and having a reduced amount of fluorinated surfactant**

(71) Applicant: 3M Innovative Properties Company, Saint Paul, Minnesota 55144-1000 (US)
(72) Inventor: Epsch, Rebekka, 1831 Diegem (BE); Kloos, Friedrich, 1831 Diegem (BE); Loehr, Gernot, 1831 Diegem (BE)
(74) Representative: Voortmans, Gilbert J.L.

(57) **Abstract**

The present invention provides an aqueous fluoropolymer dispersion comprising a melt processible fluoropolymer in an amount of at least 25% by weight based on the weight of the aqueous fluoropolymer dispersion and a fluorinated surfactant having a molecular weight of not more than 1000g/mol in an amount of not more than 100 ppm, preferably less than 50 ppm, more preferably less than 25 ppm and most preferably less than 10 ppm based on the weight of fluoropolymer solids or being free of said fluorinated surfactant. The aqueous fluoropolymer dispersion has a conductivity of at least 200 µS/cm, preferably at least 500 µS/cm and more preferably at least 1000µS/cm.

## Description

### 1. Field of the invention

The present invention relates to an aqueous fluoropolymer dispersion that is free of, or substantially free of low molecular weight fluorinated surfactant. In particular, the invention relates to an aqueous dispersion of melt processible fluoropolymer. The present invention also relates to a method of reducing the amount of low molecular weight fluorinated surfactant in such dispersions.

### 2. Background of the invention

Fluoropolymers, i.e. polymers having a fluorinated backbone, have been long known and have been used in a variety of applications because of several desirable properties such as heat resistance, chemical resistance, weatherability, UV-stability etc... The various fluoropolymers are for example described in "Modern Fluoropolymers", edited by John Scheirs, Wiley Science 1997. The fluoropolymers may have a partially fluorinated backbone, generally at least 40% by weight fluorinated, or a fully fluorinated backbone. Particular examples of fluoropolymers include polytetrafluoroethylene (PTFE), copolymers of tetrafluoroethylene (TFE) and hexafluoropropylene (HFP) (FEP polymers), perfluoroalkoxy copolymers (PFA), ethylene-tetrafluoroethylene (ETFE) copolymers, terpolymers of tetrafluoroethylene, hexafluoropropylene and vinylidene fluoride (THV) and polyvinylidene fluoride polymers (PVDF).

The fluoropolymers may be used to coat substrates to provide desirable properties thereto such as for example chemical resistance, weatherability, water- and oil repellency etc... For example aqueous dispersions of fluoropolymer may be used to coat kitchen ware, to impregnate fabric or textile e.g. glass fabric, to coat paper or polymeric substrates. Many of the applications of fluoropolymers, in particular coating of substrates, require fluoropolymer dispersions of a very high purity. Even very small amounts of contaminants may result in defective coatings.

A frequently used method for producing aqueous dispersions of fluoropolymers involves aqueous emulsion polymerization of one or more fluorinated monomers usually followed by an upconcentration step to increase the solids content of the raw dispersion obtained after the emulsion polymerization. The aqueous emulsion polymerization of fluorinated monomers generally involves the use of a fluorinated surfactant. Frequently used fluorinated surfactants include perfluorooctanoic acids and salts thereof, in particular ammonium perfluorooctanoic acid. Further fluorinated surfactants used include perfluoropolyether surfactants such as disclosed in EP 1059342, EP 712882, EP 752432, EP 816397, US 6,025,307, US 6,103,843 and US 6,126,849. Still further surfactants that have been used are disclosed in US 5,229,480, US 5,763,552, US 5,688,884, US 5,700,859, US 5,804,650, US 5,895,799, WO 00/22002 and WO 00/71590.

Most of these fluorinated surfactants have a low molecular weight, i.e. a molecular weight of less than 1000g/mol. Recently, such low molecular weight fluorinated compounds have raised environmental concerns. For example, perfluoroalkanoic acids are not biodegradable. Furthermore, the fluorinated surfactants are generally expensive compounds. Accordingly, measures have been taken to either completely eliminate the fluorinated low molecular weight surfactants from aqueous dispersion or at least to minimize the amount thereof in an aqueous dispersion. For example, WO 96/24622 and WO 97/17381 disclose an aqueous emulsion polymerization to produce fluoropolymers whereby the polymerization is carried out without the addition of fluorinated surfactant.

However, most of the aqueous emulsion polymerization processes are still being carried out with the aid of a fluorinated surfactant and there thus continues to be the need to remove or at least reduce the level of fluorinated surfactant in the resulting dispersions. US 4,369,266 discloses a method whereby part of fluorinated surfactant is removed through ultrafiltration. In the latter case, the amount of fluoropolymer solids in the dispersion is increased as well, i.e. the dispersion is upconcentrated while removing fluorinated surfactant. The disadvantage of the process of US 4,396,266 is that considerable amounts of the fluorinated surfactant leave the dispersion via the permeate of the ultrafiltration. Recovering the surfactant from such permeate is costly.

WO 00/35971 further discloses a method in which the amount of fluorinated surfactant is reduced by contacting the fluoropolymer dispersion with an anion exchange resin. According to the preferred embodiment of the process disclosed in this WO publication, a non-ionic surfactant is added to the aqueous dispersion in order to stabilize the dispersion while being in contact with the anion exchange resin. The thus resulting dispersion is then allowed to flow through a column in which the anion exchange resin is fixed which results in the level of fluorinated resin being reduced to 5ppm or less when the dispersion leaves the column.

It has now been found that the process disclosed in WO 00/35971 has some limitations when it is being used for removal of fluorinated surfactant from dispersions of melt processible fluoropolymers. That is, after a certain volume of the aqueous dispersion was processed, gellation occurred in the anion exchange resin bed. This gellation may cause channel formation in the resin bed contained in the column with the result that a break through occurs, i.e. the dispersion leaving the column shows no or little removal of fluorinated surfactant, or the gellation may cause the resin bed to become blocked in that no further dispersion can flow through. It was furthermore observed that dispersions obtained from the process, i.e. having a reduced amount of fluorinated surfactant, also showed gellation upon standing for some time.

As melt-processible fluoropolymers find application in fluoroelastomer articles and articles based on fluorothermoplasts, it would be desirable to overcome the aforementioned problem.

### 3. Summary of the invention

According to the present invention there is provided an aqueous fluoropolymer dispersion comprising a melt processible fluoropolymer in an amount of at least 25% by weight based on the weight of the aqueous fluoropolymer dispersion and a fluorinated surfactant having a molecular weight of not more than 1000g/mol in an amount of not more than 100 ppm, preferably less than 50 ppm, more preferably less than 25 ppm and most preferably less than 10 ppm based on the weight of fluoropolymer solids or being free of said fluorinated surfactant. The aqueous fluoropolymer dispersion has a conductivity of at least 200 µS/cm, preferably at least 500 µS/cm and more preferably at least 1000µS/cm. Gellation of the fluoropolymer when the aqueous fluoropolymer dispersion is left to stand can thereby be avoided.

It was found that the problem of gellation particularly occurred when the dispersion has a high content of the melt processible fluoropolymer such as 25% by weight or more. Also, the problem is more pronounced with a decreasing amount of fluorinated surfactant. The gellation could however be prevented by adjusting the conductivity to a sufficiently high level. Thus, by increasing the conductivity of the dispersion, the occurrence of gellation could be avoided.

It was further found that gellation occurring during removal of fluorinated surfactant in a process in which the dispersion is contacted with an anion exchange resin could also be avoided by adjusting the conductivity of the dispersion to a sufficiently high level prior to contacting that dispersion with the anion exchange resin.

The invention accordingly also provides a method of reducing the amount of fluorinated surfactant having a molecular weight of not more than 1000g/mol in an aqueous dispersion of a melt processible fluoropolymer, said method comprising the steps of:
- contacting said fluoropolymer dispersion with an anion exchange resin so as to bind fluorinated surfactant thereto,
- and separating said fluoropolymer dispersion from said anion exchange resin;
whereby said aqueous dispersion of said melt processible fluoropolymer dispersion has a conductivity such that an amount of aqueous fluoropolymer dispersion equivalent to at least 3 and preferably at least 5 times the bed volume of said anion exchange resin can be treated with said anion exchange resin before break through occurs or blocking of the resin bed occurs.
Generally, it is desired that the level of removal of fluorinated surfactant is such that the resulting dispersion contains less than 100ppm, preferably less than 50ppm, more preferably less than 25ppm and most preferably less than 10ppm of the fluorinated surfactant based on the weight of fluoropolymer solids.

The term 'melt processible fluoropolymer' in connection with the present invention is meant to indicate fluoropolymers that have a sufficiently low melt viscosity such that they can be melt processed in available melt processing equipment such as polymer melt extruders. Melt processible fluoropolymers in connection with the present invention include fluorothermoplasts as well as fluoropolymers suitable for making fluoroelastomers.

The term 'break through' in connection with the present invention is used to indicate the point at which a substantial increase (e.g. 10% or more) in the amount of fluorinated surfactant in the dispersion leaving the anion exchange resin bed is noticed, i.e. the amount of fluorinated surfactant that is being removed by the anion exchange resin starts decreasing and the removal process becomes less efficient.

### 4. Detailed description of the invention

The fluoropolymer dispersions are aqueous fluoropolymer dispersions comprising at least 25% by weight (based on the total weight of the dispersion) of particles of melt-processible fluoropolymer. Typically, the amount of melt-processible fluoropolymer in the dispersion may vary between 30% by weight and 70% by weight, preferably between 40% by weight and 60% by weight. Melt-processible fluoropolymers for use with the dispersion include fluorothermoplasts and fluoropolymers for making fluoroelastomers. Fluorothermoplasts typically have a well defined and pronounced melting point. Fluorothermoplasts can have a melt flow index of more than 0.1 measured at 265°C and at a load of 5 kg or at 372 °C and a load of 5 kg. Typically, the melting point of a fluorothermoplast will be at least 60°C with a preferred range being between 100°C and 310°C. The fluoropolymer of the fluoropolymer dispersion may also be a polymer that upon curing results a fluoroelastomer. Typically, such fluoropolymers are amorphous fluoropolymers that have no melting point or that have a hardly noticeable melting point. Still further, the fluoropolymer may comprise so-called micro-powder, which is typically a low molecular weight polytetrafluoroethylene (PTFE). Due to the low molecular weight of the PTFE, micro-powders are melt processible.

Examples of melt-processible fluoropolymers include a copolymer of vinylidene fluoride and hexafluoropropylene, a copolymer of tetrafluoroethylene and vinylidene fluoride, a copolymer of tetrafluoroethylene and propylene, a copolymer of tetrafluoroethylene and perfluorovinyl ether, a copolymer of vinylidene fluoride and perfluorovinyl ether, a copolymer of tetrafluoroethylene, ethylene or propylene and perfluorovinyl ether a copolymer of tetrafluoroethylene, hexafluoropropylene and perfluorovinyl ether, a copolymer of tetrafluoroethylene, vinylidene fluoride and hexafluoropropylene and optionally chlorotrifluoroethylene (CTFE), a copolymer of vinylidene fluoride, tetrafluoroethylene and perfluorovinyl ether and a copolymer of tetrafluoroethylene, ethylene or propylene, hexafluoropropylene and perfluorovinyl ether.

The particle size of the melt-processible fluoropolymer in the aqueous fluoropolymer dispersion is typically between 40nm and 400nm as such particle sizes (number average diameter) typically result from an emulsion polymerization. Smaller particle sizes are contemplated as well, for example between 20nm and 50nm, which are typically obtained with microemulsion polymerization. The fluoropolymer dispersion may also comprise non-melt processible fluoropolymer particles. Non-melt processible fluoropolymers include PTFE and modified PTFE, i.e. a copolymer of tetrafluoroethylene with low amounts e.g. less than 1% by weight of a modifying comonomer.

Aqueous fluoropolymer dispersions typically are obtained through an aqueous emulsion polymerization and the fluorinated surfactant contained in the aqueous fluoropolymer dispersion is typically an anionic fluorinated surfactant as this is commonly used in the aqueous emulsion polymerization. Commonly used fluorinated surfactants are non-telogenic and include those that correspond to the formula:

(Y-R_{f}-Z)ₙ-M (I)

wherein Y represents hydrogen, Cl or F; R_{f} represents a linear or branched perfluorinated alkylene having 4 to 10 carbon atoms; Z represents COO⁻ or SO₃⁻ M represents a cation including monovalent and multivalent cations, e.g. an alkali metal ion, an ammonium ion or a calcium ion and n corresponds to the valence of M and typically has a value of 1, 2 or 3.
Representative examples of emulsifiers according to above formula (I) are perfluoroalkanoic acids and salts thereof such as perfluorooctanoic acid and its salts in particular ammonium salts. The fluorinated surfactant may be present in any amount in the fluoropolymer dispersion that is to be subjected to the method of the present invention. Usually, the aqueous fluoropolymer dispersion obtained after emulsion polymerization will contain fluorinated surfactant in amounts between 0.2% by weight and 5% based on the total weight of solids in the dispersion, more typically between 0.2% by weight and 2% by weight based on the total weight of solids. As mentioned above, there are also emulsion processes known in which no fluorinated surfactant is added, but, in such processes, low molecular weight fluorinated surfactant may form in situ during the polymerization.

If the fluoropolymer dispersion contains more than 100ppm of fluorinated surfactant, it will be desired to reduce the amount thereof, generally to a level of less than 100ppm, preferably less than 50ppm, more preferably less than 25 ppm and most preferably less than 10ppm based on the weight of fluoropolymer solids. To reduce the amount of fluorinated surfactant in the aqueous fluoropolymer dispersion, the dispersion is contacted with an anion exchange resin, generally in the presence of a stabilizing surfactant as disclosed in WO 00/35971. The surfactant added is typically a non-fluorinated surfactant and is preferably a non-ionic surfactant as disclosed for example in WO 00/35971, in particular those that are commonly used in commercially available aqueous dispersions. However, other non-fluorinated surfactants can be used as well, as long as they are capable of stabilizing the fluoropolymer dispersion, that is as long as they are able of preventing coagulation of the fluoropolymer dispersion while being contacted with the anion exchange resin.

Examples of non-ionic surfactant that can be used include those described in "Non-ionic Surfactants" M.J. Schick, Marcel Dekker, Inc., New York 1967 and in particular those that correspond to the formula:

R¹-O-[CH₂CH₂O]ₙ-[R²O]ₘ-R³ (II)

wherein R¹ represents an aromatic or aliphatic hydrocarbon group having at least 8 carbon atoms, R² represents an alkylene having 3 carbon atoms, R³ represents hydrogen or a C₁-C₃ alkyl group, n has a value of 0 to 40, m has a value of 0 to 40 and the sum of n+m being at least 2.
It will be understood that in the above formula (II), the units indexed by n and m may appear as blocks or they may be present in an alternating or random configuration.

Examples of non-ionic surfactants according to formula (II) above include alkylphenol oxy ethylates of the formula: 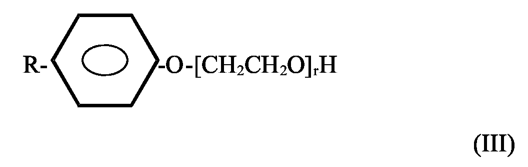 wherein R is an alkyl group of 4 to 20 carbon atoms and r represents a value of 4 to 20. Examples of surfactants according to formula (III) include ethoxylated p-isooctylphenol commercially available under the brand name TRITON™ such as for example TRITON™ X 100 wherein the number of ethoxy units is about 10.

Still further examples include those in which R¹ in the above formula (II) represents an alkyl group of 4 to 20 carbon atoms, m is 0 and R³ is hydrogen. An example thereof includes isotridecanol ethoxylated with about 8 ethoxy groups and which is commercially available as GENAPOL® X 080 from Clariant GmbH. Non-ionic surfactants according to formula (II) in which the hydrophilic part comprises a block-copolymer of ethoxy groups and propoxy groups may be used and well. Such non-ionic surfactants are commercially available from Clariant GmbH under the trade designation GENAPOL® PF 40 and GENAPOL® PF 80.

The stabilizing surfactant is added to the fluoropolymer dispersion in an amount effective to achieve stabilization of the fluoropolymer dispersion while being contacted with the anion exchange resin. The effective amount can be readily determined by one skilled in the art with routine experimentation but is generally between 0.5% by weight and 15% by weight, preferably between 1 and 12% by weight based on the weight of solids in the fluoropolymer dispersion. The addition of the stabilizing surfactant is conveniently added to the fluoropolymer dispersion under mild agitation, e.g. stirring of the fluoropolymer dispersion. The stability of the fluoropolymer dispersion may be further enhanced by adjusting the pH of the dispersion by adding a base such as ammonia or sodium hydroxide thereto to achieve a pH between 7 and 9. Although adjusting the pH of the dispersion to a pH between 7 and 9 is generally preferred, it is not a requirement of the process and it is thus also possible to contact a stabilized fluoropolymer dispersion with the anion exchange resin without adjustment of the pH. To the fluoropolymer dispersion may further be added compounds to destroy residual initiator such as residual persulfate to suppress corrosion of the process equipment. For example, organic reducing agents such as hydroxylamines, azodicarbonamides and vitamin C may be added.

There is no particular requirement as to the basicity of the anion exchange resin that can be used although it will generally be preferred to use a strong basic anion exchange resin because of the increased effectiveness of the anion exchange resin with increased basicity of the resin. Nevertheless, also an anion exchange resin with a weak basicity or a medium strong basicity can be used in this invention. The terms strong, medium strong and weak basic anion exchange resin are defined in "Encyclopedia of Polymer Science and Engineering", John Wiley & Sons, 1985, Volume 8, page 347 and "Kirk-Othmer", John Wiley & Sons, 3^{rd} edition, Volume 13, page 687. Strong basic anion exchange resin typically contain quaternary ammonium groups, medium strong resins usually have tertiary amine groups and weak basic resins usually have secondary amines as the anion exchange functions. Examples of anion exchange resins that are commercially available for use in this invention include AMBERLITE® IRA-402, AMBERJET® 4200, AMBERLITE® IRA-67 and AMBERLITE® IRA-92 all available from Rohm & Haas, PUROLITE® A845 (Purolite GmbH) and LEWATIT® MP-500 (Bayer AG).

The anion exchange resin may be converted into its OH⁻ form prior to use in the process of this invention. This is typically done by treating the resin with an aqueous ammonia or sodium hydroxide solution. However, the anion exchange resin does not have to be in the OH⁻ form and can have other counter ions such as chloride. The anion exchange resin may be pre-treated with an aqueous solution to the stabilizing surfactant used to stabilize the fluoropolymer dispersion. Thus, if for example a non-ionic surfactant is used as the stabilizing surfactant, the anion exchange resin may be pretreated with an aqueous solution of the non-ionic surfactant.

To remove fluorinated surfactant, the stabilized fluoropolymer dispersion is conveniently contacted with an effective amount of anion exchange resin to reduce the level of fluorinated surfactant to a desired level. According to a preferred embodiment, the fluoropolymer dispersion is contacted with the anion exchange resin by agitating the mixture of fluoropolymer dispersion and anion exchange resin. Ways to agitate include shaking a vessel containing the mixture, stirring the mixture in a vessel with a stirrer or rotating the vessel around its axel. The rotation around the axel may be complete or partial and may include alternating the direction of rotation. Rotation of the vessel is generally a convenient way to cause the agitation. When rotation is used, baffles may be included in the vessel. Still further, agitation of the mixture of anion exchange resin and fluoropolymer dispersion may be caused by bubbling a gas through the mixture. Generally the gas used will be an inert gas such as nitrogen or air. A further attractive alternative to cause agitation of the mixture of exchange resin and fluoropolymer dispersion is fluidizing the exchange resin. Fluidization may be caused by flowing the dispersion through the exchange resin in a vessel whereby the flow of the dispersion causes the exchange resin to swirl. The conditions of agitation are generally selected such that on the one hand, the anion exchange resin is fully contacted with the dispersion, that is the anion exchange resin is completely immersed in the dispersion, and on the other hand the agitation conditions will be sufficiently mild so as to avoid damaging the anion exchange resin and/or causing contamination of the fluoropolymer dispersion.

Alternatively, the aqueous fluoropolymer dispersion may be contacted with the anion exchange resin in a fixed bed configuration. Fixed resin bed configurations include the so called column technology in which the resin rests and removal of a substance occurs through a chromatographic process by flowing the dispersion through the resin bed.

The amount of exchange resin effective to reduce the level of fluorinated surfactant is typically at least 10% and preferably at least 15% by volume based on the total volume of anion exchange resin and fluoropolymer dispersion to reduce the fluorinated surfactant level within a reasonable amount of time, e.g. 4 hours.

In accordance with the present invention, when a dispersion of a melt-processible fluoropolymer is subjected to the aforementioned process of removal of fluorinated surfactant, the conductivity of the dispersion should be adjusted to avoid gellation of the dispersion while being brought in contact with the anion exchange resin. The desired conductivity can be adjusted by adding to the aqueous fluoropolymer dispersion an appropriate salt. Generally, suitable salts include water soluble metal salts and in particular inorganic water soluble salts e.g. metal salts such as metal chlorides, metal bromides, metal sulfates, metal chromates etc., whereby the metal can be monovalent or multi-valent or inorganic ammonium salts such as ammonium chloride. Particular examples include sodium chloride, potassium chloride, potassium sulfate and magnesium chloride. Alternatively, organic salts such as organic metal salts or a tetraalkyl ammonium salt can be used as well. Preferably, the alkyl groups of the tetraalkyl ammonium salt will have between 1 and 4 carbon atoms and they can be the same or different. Examples include tetrabutyl ammonium chloride, tetraethyl ammonium chloride and triethyl methyl ammonium bromide. When an organic salt is used to adjust the conductivity of the dispersion, it will generally be preferred that the organic salt is not a surfactant.

The necessary amount of salt that needs to be added to the dispersion will depend on such factors as the nature of the salt added, nature of anion exchange resin, ionic strength of the dispersion from which the fluorinated surfactant is to be removed and amount of fluoropolymer solids. The minimum conductivity and amount of salt to be added can be readily determined by one skilled in the art by routine experimentation. The conductivity should be sufficient to allow at least a volume of the dispersion equivalent to 3 to 5 times the anion exchange resin bed volume to be treated before either a break through occurs or before blocking of the resin bed occurs. Generally, the amount of salt to be added will be such as to achieve a level of conductivity of at least 200µS/cm when the dispersion is separated from the anion exchange resin, preferably at least 500µS/cm and more preferably at least 1000µS/cm. The conductivity of the dispersion can be measured as set forth in the examples.

Additionally, even if there is no need to reduce the level of fluorinated surfactant in the dispersion because it is already at the desired level, it will be necessary to adjust the ionic strength in the aqueous fluoropolymer dispersion to avoid gellation during storage of the dispersion. The minimum conductivity needed to avoid gellation may depend on such factors as the amount of fluoropolymer solids and the amount of fluorinated surfactant in the dispersion. The necessary conductivity can be readily determined by one skilled in the art with routine experiments but is generally at least 200µS/cm. The conductivity can be adjusted by adding a salt to the dispersion as described above. Preferably, the conductivity is adjusted with an inorganic salt. If an organic salt is used, it should generally not be a surfactant. The fluoropolymer dispersion in accordance with the present invention that is low in fluorinated surfactant and that has a conductivity of at least 200 µS/cm will generally contain a non-ionic surfactant as described above to stabilize the dispersion. If a non-ionic surfactant has been added in the process of removing fluorinated surfactant as described above, the desired level of non-ionic surfactant is usually obtained but if need be, the level of non-ionic surfactant can be increased by adding further non-ionic surfactant after the removal process. If no fluorinated surfactant was used during polymerization, it may be desirable to add non-ionic surfactant. The amount of non-ionic surfactant is typically between 0.5% by weight and 15% by weight based on the amount solids, preferably between 1% and 12% by weight.

The fluoropolymer dispersion can be used for making any of the fluoropolymer articles known in the art. In particular, the fluoropolymer dispersions can be used to coat substrates such as metal substrates, plastic substrates, cookware or fabric. For these coating applications, fluorothermoplasts are used in particular. The fluoropolymer dispersions may also be used to coat or impregnate textile or fabrics, in particular glass fiber substrates. Before coating, the fluoropolymer dispersion may be mixed with further coating aids, generally non-fluorinated organic compounds and/or inorganic fillers to prepare a coating composition as may be desired for the particular coating application. For example, the fluoropolymer dispersion may be combined with polyamide imide and polyphenylene sulfone resins as disclosed in for example WO 94/14904 to provide anti-stick coatings on a substrate. Further coating aids include inorganic fillers such as colloidal silica, aluminium oxide, and inorganic pigments as disclosed in for example EP 22257 and US 3,489,595.

The fluoropolymer dispersions are generally obtained by starting from a so-called raw dispersion, which may result from an emulsion polymerization of fluorinated monomer. Such dispersion may be free of low molecular weight fluorinated surfactant if the polymerization has been conducted in the absence of a low molecular weight fluorinated surfactant but will generally contain substantial amounts of low molecular weight fluorinated surfactant. If the concentration of low molecular weight fluorinated surfactant in the dispersion is more than a desired level at least part thereof should be removed as described above. Subsequent to removal of at least part of the fluorinated surfactant, the dispersion may be upconcentrated with any of the known techniques to obtain a desired amount of solids in the dispersion. Alternatively, the fluoropolymer dispersion may be first upconcentrated and then subjected to a removal of fluorinated surfactant.

The invention will now be illustrated with reference to the following examples without however the intention to limit the invention thereto.

### EXAMPLES

### Test methods

### Viscosity:

The viscosity of the dispersions was measured at a constant temperature of 20°C and a shear rate of 210 D(1/s) using the Physika™ rotational viscometer Rheolab™ MC1 with the double gap measuring system Z1-DIN (DIN 54453).

### Conductivity:

The conductivity of the dispersion was measured at a constant temperature of 20 °C using Metrohm™ conductometer 712. The device was calibrated according to operating instructions of the device (Metrohm 8.712.1001) using a 0.1000 mmol/l KCl standard solution.

### Abbreviations:

- PTFE:: polytetrafluoroethylene
- TFE:: tetrafluoroethylene
- HFP:: hexafluoropropylene
- VDF:: vinylidene fluoride
- THV:: copolymer of TFE, HFP and VDF
- PFA:: copolymer of TFE and a perfluorinated vinyl ether
- APFOA:: ammonium perfluorooctanoate
- NIS-1:: commercially available non-ionic surfactant TRITON™ X 100
- AER-1:: anion exchange resin ABMERLITE™ IRA 402 (available from Rohm&Haas) that was converted into OH⁻ form with a 4% by weight NaOH aqueous solution and preconditioned with a 1% by weight aqueous solution of NIS-1.
- AER-2:: anion exchange resin ABMERLITE™ A26 (available from Rohm&Haas) that was converted into OH⁻ form with a 4% by weight NaOH aqueous solution and preconditioned with a 1% by weight aqueous solution of NIS-1

### Examples 1 and 2:

Two samples of an aqueous dispersion of PFA having a solids content of 33.5% by weight, 0.32% by weight based on solids of APFOA and 5% by weight based on solids of NIS-1 was pumped over a column of anion exchange resin AER-1 at a flow rate of 100 ml/h. The resin bed volume was 100 ml. The samples differed in their conductivity level as set forth in below table 1. The level of conductivity of the dispersion was adjusted by adding K₂SO₄ to the dispersion in the amount indicated.

| Example No | 1 | 2 |
|---|---|---|
| *Processing parameter* | | |
| Flow rate, ml/h | 100 | 100 |
| Run time, h | <1 | 8 |
| *Salt additive* | - | K₂SO₄ |
| Amount, mmol/kg (solid) | - | 10.3 |
| Conductivity, µS/cm | 720 | 1340 |
| *Jamming yes*/*no* | yes | no |

| *Ion-exchanged dispersion* | | |
|---|---|---|
| APFOA, ppm (weight based on solid polymer) | 42 | 35 |
| Conductivity, µS/cm | 50 | 1130 |

From the above table it can be seen that blocking of the resin bed occurred when the conductivity of the resulting ion-exchanged dispersion was below 200 µS/cm (compare examples 1 and 2). The dispersion obtained in example 2 did not show gellation whereas the dispersion obtained in example 1 gelled after a short operating time. The dispersion in example 2 is also stable against gellation upon storage.

### Example 3:

600 ml of a PFA dispersion having a solids content of 48.7% by weight, 0.32% by weight based on solids of APFOA and 5% by weight based on solids of NIS-1 to which 15.1 mmol/kg solids of KOH were added, was stirred in a vessel with 1000ml of AER-2 for two hours and thereafter the anion exchange resin was filtered off. The dispersion had a conductivity level of 980 µS/cm before contacting with the anion exchange resin. After having been contacted with the anion exchange resin, the conductivity was about 1480 µS/cm. The dispersion had less than 50 ppm of residual APFOA (by weight based on solids). The dispersion did not gel upon standing. The viscosity level was about 3 mPa*s (shear rate 210 s⁻¹).

### Example 4 (comparative example):

200 ml of a PFA dispersion with a solid content, APFOA content and NIS-1 content equal to example 3 but to which no salt was added, was stirred in a vessel with 150 ml of AER-2 for six hours and thereafter the anion exchange resin was filtered off. The dispersion had a conductivity level of 720 µS/cm before contacting with the anion exchange resin. After having been contacted with the anion exchange resin, the conductivity dropped to about 60 µS/cm. The dispersion after the anion exchange process had less than 50 ppm of residual APFOA (by weight based on solids). The dispersion gelled upon standing.

### Examples 5 to 7:

550 ml of an aqueous dispersion of THV having a solids content of 51% by weight, 0.45 % by weight based on solids of APFOA and 5% by weight based on solids of NIS-1 was stirred in a vessel with 120 ml of AER-1 and 120 ml of Purolite™ C150 (cation exchanger) for six hours and thereafter the exchange resins were filtered off. During the exchange process gellation occurred, which could be reversed by adding potassium chloride to the dispersion after anion and cation exchange. The conductivity and viscosity values of the so treated dispersion are shown in table 2. The residual APFOA level was about 85 ppm (by weight based on solids).

| Example No | 5 | 6 | 7 |
|---|---|---|---|
| *Cation and anion exchanged dispersion* | | | |
| *Salt additive* | - | KCl | KCl |
| Amount, mmol/kg (solid) | - | 2 | 27 |
| APFOA, ppm (weight based on solid polymer) | 80 | 80 | 80 |
| Conductivity, µS/cm | 120 | 165 | 1330 |
| Viscosity, mPa*s (Shear rate: 210 s⁻¹) | - | 22.5 | 4.6 |

The dispersion obtained in example 7 did not show gellation upon storage whereas the dispersion obtained in example 6 gelled upon standing.

### Example 8 (Comparative example)

An aqueous dispersion of a non-melt processible PTFE having a solids content of 58%, 0.3% by weight based on solids of APFOA and stabilized with 5.2% by weight based on solids of NIS-1 was subjected to the anion exchange process described in example 4. No blocking of the resin bed occurred and the resulting dispersion had a conductivity of 20µS/cm and a content of APFOA of 30 ppm by weight based on solids. No gellation occurred upon standing. This example shows that the problem of gellation is specific to dispersions of melt processible polymer and does not occur with non-melt processible PTFE.

## Claims

1. An aqueous fluoropolymer dispersion comprising a melt processible fluoropolymer in an amount of at least 25% by weight based on the weight of the aqueous fluoropolymer dispersion and a fluorinated surfactant having a molecular weight of not more than 1000g/mol in an amount of not more than 100ppm based on the weight of fluoropolymer solids or being free of said fluorinated surfactant, said aqueous fluoropolymer dispersion having a conductivity of at least 200 µS/cm.

2. An aqueous fluoropolymer dispersion according to claim 1 wherein the conductivity of said aqueous fluoropolymer dispersion is at least 500 µS/cm.

3. An aqueous fluoropolymer dispersion according to claim 1 further comprising a non-ionic surfactant.

4. An aqueous fluoropolymer dispersion according to claim 1 wherein said fluoropolymer dispersion contains a water soluble inorganic salt or a tetraalkyl ammonium salt, the alkyl groups of which have 1 to 4 carbon atoms.

5. An aqueous fluoropolymer dispersion according to claim 4 wherein said inorganic salt is an inorganic metal salt or an inorganic ammonium salt.

6. An aqueous fluoropolymer dispersion according to claim 1 wherein the amount of said fluorinated surfactant is not more than 50ppm based on the weight of fluoropolymer solids.

7. An aqueous fluoropolymer dispersion according to claim 1 wherein the amount of said melt processible fluoropolymer is between 30% by weight and 70% by weight.

8. A method of reducing the amount of fluorinated surfactant having a molecular weight of not more than 1000g/mol in an aqueous dispersion of a melt processible fluoropolymer, said method comprising the steps of:
- contacting said fluoropolymer dispersion with an anion exchange resin so as to bind fluorinated surfactant thereto,
- and separating said fluoropolymer dispersion from said anion exchange resin;
whereby said aqueous dispersion of said melt processible fluoropolymer dispersion has a conductivity such that an amount of aqueous fluoropolymer dispersion equivalent to at least 3 times the bed volume of said anion exchange resin can be treated with said anion exchange resin before break through occurs or blocking of the resin bed occurs.

9. A method according to claim 8 wherein the conductivity of the aqueous dispersion after separation from said anion exchange resin is at least 200 µS/cm.

10. A method according to claim 9 wherein the conductivity of the aqueous fluoropolymer dispersion is adjusted with a water soluble metal salt.

11. A method according to claim 8 wherein said fluoropolymer dispersion contains a non-ionic surfactant as a stabilizer.

12. Method according to claim 8 wherein said aqueous dispersion is agitated with said anion exchange resin.

13. Method according to claim 8 wherein the fluorinated surfactant is removed such that the resulting dispersion contains said fluorinated surfactant in an amount of less than 100ppm based on the total weight of fluoropolymer solids.

14. Method of coating a substrate with a fluoropolymer, said method comprising the step of coating the aqueous fluoropolymer dispersion of any of claims 1 to 7 to the substrate.

15. Method according to claim 14 wherein said substrate is selected from the group consisting of a metal substrate, a plastic substrate, cookware or a fabric.
